(19) Europäisches Patentamt
European Patent Office
Office européen des brevets

(11) Veröffentlichungsnummer: **0 011 760**
**B1**

(12) # EUROPÄISCHE PATENTSCHRIFT

(45) Veröffentlichungstag der Patentschrift: **25.11.81**

(51) Int. Cl.³: **C 09 D 3/80**, C 08 L 33/06, C 08 K 5/34

(21) Anmeldenummer: **79104445.6**

(22) Anmeldetag: **12.11.79**

(54) **Wasserverdünnbare Lackbindemittel und ihre Verwendung zur Herstellung wässriger Überzugsmittel.**

(30) Priorität: **24.11.78 DE 2850872**

(43) Veröffentlichungstag der Anmeldung: **11.06.80 Patentblatt 80/12**

(45) Bekanntmachung des Hinweises auf die Patenterteilung: **25.11.81 Patentblatt 81/47**

(84) Benannte Vertragsstaaten: **AT BE CH DE FR GB IT NL SE**

(56) Entgegenhaltungen:
**DE-A-2 200 432**
**DE-A-2 427 853**
**DE-B-1 170 571**

(73) Patentinhaber: **BAYER AG, Zentralbereich Patente, Marken und Lizenzen, D-5090 Leverkusen 1, Bayerwerk (DE)**

(72) Erfinder: **Höhlein, Peter, Dr., Wilhelmshofallee 12, D-4150 Krefeld (DE)**
Erfinder: **Schoeps, Jochen, Dr., Windmühlenstrasse 126, D-4150 Krefeld (DE)**

**EP 0 011 760 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Wasserverdünnbare Lackbindemittel und ihre Verwendung zur Herstellung wäßriger Überzugsmittel

Die Erfindung betrifft Carboxylgruppen enthaltende, festkörperreiche Lackbindemittel auf Basis eines Gemisches aus einem carboxylgruppenhaltigen, selbstvernetzbaren Mischpolymeren, einem Aminoplastharz und einem gesättigten Lactam als Reaktivverdünner, die nach der Neutralisation der Carboxylgruppen mit Wasser verdünnbar und für die Herstellung waschlaugenbeständiger Einbrennlack geeignet sind.

Lösungspolymerisate von Acrylmonomeren werden aufgrund ihrer Eigenschaften, wie Gilbungsfestigkeit, Außenbeständigkeit und Glanzhaltung für die Formulierung von Decklacken oder Einschichtlacken, an die vom Verbraucher besondere Ansprüche in dieser Beziehung gestellt werden, herangezogen.

Gegenwärtig sind diese Bindemittel meist in organischen Lösungsmitteln gelöst, wodurch bei der Verarbeitung der daraus hergestellten Lacke Probleme bezüglich der Reinigung der Abluft entstehen.

Auch die heute bekannten und eingesetzten wasserlöslichen Bindemittel und Lacke auf der Basis von Lösungspolymerisaten von Acrylmonomeren enthalten noch relativ große Mengen von umweltbelastenden Lösungsmitteln. Die Notwendigkeit der Mitverwendung dieser Lösungsmittel ist durch das Viskositätsverhalten dieser Bindemittel beim Verdünnen mit Wasser gegeben. Derartige Harzlösungen zeigen, wenn sie einen zu geringen Anteil an organischen Hilfslösungsmitteln enthalten, beim Verdünnen der neutralisierten Lösung mit Wasser oft einen Bereich, in dem die Viskosität der Lösung wieder ansteigt, so daß oft die ursprüngliche Viskosität der wasserfreien Lösung noch überschritten wird (Viskositätsanomalie). Dasselbe Bild zeigt sich auch bei Verwendung schlechter Lösungsvermittler.

Ferner sind wasserlösliche, wasserverdünnbare bzw. wasserdispergierbare Lackformulierungen bekannt, die Bindemittel aus carboxylgruppenhaltigen Acrylatmischpolymerisaten und Aminoplastharzen enthalten. Für den speziellen Anwendungszweck als waschlaugenbeständige Einschichtlacke können sie jedoch alle nicht völlig befriedigen. Ein solcher Lack muß verschiedenartigen Anforderungen genügen: Er muß für die Einbrennlackierung geeignet sein und soll möglichst keine bzw. möglichst geringe Mengen von umweltbelastenden, organischen Lösungsmitteln enthalten. Die fertige Lackierung muß verseifungsbeständig sein und darf nicht vergilben; darüber hinaus muß sie die üblichen lacktechnischen Eigenschaften wie Glanz, Härte, Haftfestigkeit und Elastizität aufweisen.

Aufgabe der vorliegenden Erfindung war somit das Bereitstellen festkörperreicher Lackbindemittel, die für die Herstellung wasserverdünnbarer, festkörperreicher Überzugsmittel geeignet sind, die ihrerseits nach dem Einbrennen waschlaugenfeste, glänzende Filme mit guten lacktechnischen Daten ergeben.

Die Aufgabe wurde dadurch gelöst, daß Mischungen aus gesättigten Lactamen, Aminoplastharzen und einem Copolymerisat aus speziellen Monomeren als Bindemittel verwendet wurden.

Gegenstand der Erfindung sind daher wasserverdünnbare Lackbindemittel aus einer Mischung aus

A. 20–94 Gew.-%, vorzugsweise 45–80 Gew.-%, eines Copolymerisats, bestehend aus copolymerisierten Einheiten von
   a) 30–65 Gew.-% eines Vinyl- oder Isopropenylaromaten mit 8–14 C-Atomen oder eines Methacrylsäurealkylester mit 1–4 C-Atomen in der Alkoholkomponente oder deren Mischungen;
   b) 10–30 Gew.-% mindestens eines Acrylsäurealkylesters mit 1–8 C-Atomen in der Alkoholkomponente;
   c) 1–20 Gew.-% Maleinsäure, Fumarsäure, Itaconsäure oder deren Halbester mit 1–8 C-Atomen in der Alkoholkomponente, (Meth)Acrylsäure oder Mischungen der genannten Monomeren;
   d) 5–20 Gew.-% mindestens eines Hydroxyalkylesters der (Meth)Acrylsäure mit 2–4 C-Atomen in der Alkylgruppe oder Glycidyl(meth)acrylat oder Mischungen der vorgenannten Monomeren und
   e) 10–30 Gew.-% N-Methylol(meth)acrylsäureamid oder N-Methoxymethyl(meth)acrylsäureamid, vorzugsweise N-Methoxymethyl(meth)acrylsäureamid.

B. 1–40 Gew.-%, vorzugsweise 5–30 Gew.-%, eines gesättigten Lactams der Formel

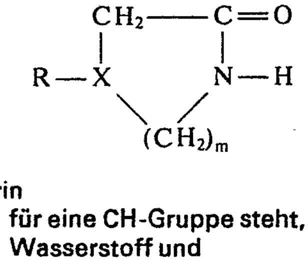

worin
X für eine CH-Gruppe steht, wobei dann
R Wasserstoff und

m eine ganze Zahl von Null bis 9 bedeuten oder
X für ein Stickstoffatom steht, wobei dann
R einen gesättigten aliphatischen Rest, vorzugsweise Methyl, einen araliphatischen Rest mit 7–12 Kohlenstoffatomen oder einen Pyridinrest oder einen durch niedere Alkylreste ($C_1-C_4$) substituierten Pyridinrest und
m die Zahl 3 bedeuten.

C. 5–40 Gew.-%, vorzugsweise 15–30 Gew.-%, eines Aminoplastharzes.

30–100% der Anzahl der Carboxylgruppen der in das Copolymerisat eingebauten Komponente A.c. sind durch Ammoniak, Mono- oder Polyamine neutralisiert.

Namentlich bzw. formelmäßig seien beispielhaft die folgenden Komponenten der Gruppen A bis C genannt:

Gruppe A. a:
Styrol; α-Methylstyrol, o- bzw. p-Chlorstyrol, o-, m- oder p-Methylstyrol, p-tert.-Butylstyrol und gegebenenfalls Mischungen derselben; bevorzugt ist Styrol.

Gruppe A. b:
Ethylacrylat, Methylacrylat, n- bzw. iso-Propylacrylat, n-Butylacrylat, 2-Ethylhexylacrylat, Isooctylacrylat, tert.-Butylacrylat oder deren Mischungen; bevorzugt sind Acrylsäurealkylester mit 1–4 Kohlenstoffatomen in der Alkoholkomponente.

Gruppe A. c:
Methyl-, Ethyl-, n- und iso-Propyl-, Butyl-, tert.-Butyl-, 2-Ethylhexyl-, Cyclohexylhalbester der Maleinsäure, Fumarsäure oder Itaconsäure, vorzugsweise der Maleinsäure; Acrylsäure, Methacrylsäure oder Mischungen der vorgenannten sauren Monomeren.
Bevorzugt sind Acrylsäure, Methacrylsäure und/oder Maleinsäurehalbester mit 4–8 C-Atomen in der Alkoholkomponente.

Gruppe A. d:
2-Hydroxyethyl(meth)-acrylat, 2-Hydroxypropyl(meth)-acrylat, 4-Hydroxybutyl(meth)-acrylat, Trimethylolpropanmono(meth)-acrylat, Pentaerythritmono(meth)-acrylat, Glycidyl(meth)-acrylat oder deren Mischungen; vorzugsweise 2-Hydroxypropyl(meth)-acrylat.

Gruppe A. e:
N-Methylolacrylsäureamid, N-Methylolmethacrylsäureamid, N-Methoxymethyl(meth)-acrylamid, vorzugsweise N-Methoxymethylacrylamid.

Gruppe B:
1-N-Methyl-hexahydro-1,4-diazepinon-3, ω-Dodecyllactam, γ-Butyrollactam, δ-Valerolactam, insbesondere ε-Caprolactam.

Der Begriff »Lactame« schließt in der vorliegenden Anmeldung die Anlagerungsprodukte der genannten Lactame mit einwertigen aliphatischen, gesättigten $C_1-C_{10}$-Alkoholen oder mit $C_2-C_8$ Glykolen oder mit Polyglykolen mit 3–4 OH-Gruppen wie Glycerin, Trimethylolpropan, Pentaerythrit usw. mit ein. Die Anlagerungsprodukte enthalten auf 1 Mol Lactam 0,2–5 Mole der vorgenannten Mono- oder Polyole. Derartige Anlagerungsprodukte sind in der DE-OS 2 062 288 beschrieben. Vorzugsweise sind in den Bindemitteln die freien Lactame enthalten.

Gruppe C:
Als Beispiel für geeignete Aminoplastharze seien Aldehydkondensationsprodukte von Melamin, Harnstoff und Benzoguanamin genannt. Im allgemeinen wird als Aldehyd Formaldehyd verwendet, obwohl brauchbare Produkte auch mit anderen Aldehyden, wie Acetaldehyd, Crotonaldehyd, Acrolein, Benzaldehyd und Furfurylaldehyd erhalten werden. Die Methylolgruppen der Aminoplaste können mit gesättigten aliphatischen Monoalkoholen mit 1–4 C-Atomen verethert sein. Melamin- und Harnstoffharze sind bevorzugt.
Besonders bevorzugt sind Melamin-Formaldehyd-Kondensationsprodukte, die nicht verethert oder mit gesättigten Monoalkoholen mit 1–4 C-Atomen verethert sind. (Vgl. französische Patentschrift 943 411 oder D. H. Solomon, The Chemistry of Organic Filmformers, 235–240, John Wiley & Sons, Inc., New York, 1967).

Die Herstellung des Copolymerisatharzes (Komponente A) kann durch Copolymerisation der Bestandteile a.–e. nach üblichen Verfahren erfolgen, wobei der radikalischen Polymerisation in der Schmelze bzw. in Lösung der Vorzug gegeben wird. Die Polymerisation kann bei Temperaturen von 70–160° C, vorzugsweise 100–150° C, durchgeführt werden.

Die Monomeren a.–e. werden im wesentlichen in den gleichen Verhältnissen, wie sie zur Polymerisation eingesetzt sind, in das Copolymerisatharz eingebaut, wobei die einpolymerisierten Einheiten im wesentlichen statistisch verteilt sind.

Bevorzugte Initiatoren zur Durchführung der radikalischen Polymerisation sind z. B. symmetrische aliphatische Azoverbindungen wie Azo-bis-isobuttersäurenitril, Azo-bis-2-methyl-valeronitril, 1,1'-

Azo-bis-1-cyclohexannitril und 2,2'-Azo-bis-isobuttersäurealkylester; symmetrische Diacylperoxide, wie z. B. Acetyl-, Propionyl- oder Butyrylperoxid, Brom-, Nitro-, Methyl- oder Methoxygruppen substituierte Benzoylperoxide sowie Lauroylperoxid; symmetrische Peroxydicarbonate, wie z. B. Diethyl-, Diisopropyl-, Dicyclohexyl- sowie Dibenzylperoxidicarbonat; tert.-Butylperoctoat oder tert.-Butylphenylperacetat sowie Peroxicarbonate wie tert.-Butyl-N-(phenylperoxi)-carbamat oder tert.-Butyl-N-(2,3-dichlor- oder -4-chlorphenyl-peroxi)carbamat. Weitere bevorzugte Peroxide sind: tert.-Butylhydroperoxid, Di-tert.-butylperoxid, Cumolhydroperoxid, Di-Cumolperoxid und tert.-Butylperpivalat.

Die Initiatoren können in Mengen von 0,2 bis 8,0 Gew.-%, bezogen auf Gesamtmonomere, eingesetzt werden. Ebenfalls können übliche Regler in Mengen von 0,1 bis 5 Gew.-%, bezogen auf Gesamtmonomere, bei der Polymerisation eingesetzt werden.

Wird in Lösung polymerisiert, so können inerte Lösungsmittel, wie z. B. Ethanol, Propanol, Isopropanol, n- oder iso-Butanol, Methylethylketon, Toluol, Xylol, Essigsäurebutylester, Butylglykol usw. verwendet werden.

Besonders günstig ist es, die Copolymerisation der Monomeren a.—e. in Gegenwart der Komponente B, d. h. der Lactame, durchzuführen, wobei nach teilweiser oder vollständiger Neutralisation der eingebauten Carboxylgruppen und Abmischen mit Aminoplastharzen die erfindungsgemäßen Bindemittel erhalten werden, welche zu wasserverdünnbar anwendbaren Lacken weiterverarbeitet werden können, ohne daß Verträglichkeitsprobleme, Viskositätsanomalien oder Kristallisationserscheinungen beobachtet werden. Falls gewünscht, können zusätzlich zum Lactam auch die vorgenannten Lösungsmittel mitverwendet werden, deren Mengen, bezogen auf Lactam, 10 bis 90 Gew.-%, vorzugsweise 10—70 Gew.-%, betragen können.

Da die eingesetzten Lactame gesättigt sind, reagieren sie mit den Monomeren nicht unter Copolymerisation, sondern setzen sich über ihre reaktive NH-Gruppe mit einem Vernetzungsmittel um. Die eingesetzten Lactame sind im wesentlichen nicht flüchtig und verbleiben daher beim Härten im Film.

Die Copolymerisate können im Anschluß an ihre Herstellung bei Temperaturen von 140—200° C von flüchtigen Bestandteilen befreit werden. Dies kann z. B. entweder unter Normaldruck in Schlangenrohrverdampfern durch Einblasen eines Inertgases wie Stickstoff oder Wasserdampf in Mengen von 0,1—1 $m^3$ auf 1 kg Harzschmelze oder im Vakuum in Ausdampfapparaturen wie Fallfilmverdampfern, Dünnschichtverdampfern, Schneckenverdampfern, Entspannungsverdampfern oder Sprühverdampfern erfolgen. Die Bedingungen werden so gewählt, daß das Lactam im Bindemittel verbleibt.

Die mittleren Molekulargewichte und die molekularen Uneinheitlichkeiten der Copolymerisatharze wurden mit Hilfe der Gelpermeationschromatographie (GPC) an Styragelen mit Tetrahydrofuran als Elutionsmittel bestimmt. Dabei werden nach Erstellung einer universellen Eichbeziehung (nach Z. Grubisic, P. Rempp und H. Benoit, J. Polymer Sci. Part B, Polymer Letters 5 (1967) 753 aus der Verteilung der Chromatogramme die Molekulargewichtsmittelwerte $\bar{M}_w$ und $\bar{M}_n$ bestimmt. Die Polymerisate besitzen mittlere Molekulargewichte von $\bar{M}_n$ = 2000—50 000, vorzugsweise $\bar{M}_n$ = 2000—15 000, und molekulare Uneinheitlichkeiten U (U = $\bar{M}_w/\bar{M}_n-1$; $\bar{M}_w$ = Gewichtsmittel, $\bar{M}_n$ = Zahlenmittel des Molekulargewichts) von 0,5—200.

Nach der Herstellung der Copolymerisate werden diese mit Lactamen in den beanspruchten Verhältnissen abgemischt. Wurde in einem Lactam poylmerisiert, dies ist bevorzugt, so entfällt das Abmischen mit Lactam bzw. kann Lactam innerhalb der beanspruchten Grenzen ergänzt werden.

Enthält das Copolymerisat eingebaute Glycidylgruppen, so kann es durch Umsetzung mit Fettsäuren modifiziert werden, wobei im Falle von ungesättigten Fettsäuren lufttrocknende Bindemittel erhalten werden können.

Im Anschluß an die Herstellung des Copolymerisats werden die im Copolymerisat enthaltenen Carboxylgruppen teilweise oder vollständig neutralisiert. Die Neutralisation kann in An- oder Abwesenheit des Lactams und ggf. weiterer konventioneller Lösungsmittel und in An- oder Abwesenheit des Aminoplastharzes erfolgen. Der Neutralisationsgrad liegt bevorzugt bei 30—100%, d. h. von 1 Grammäquivalent Carboxylgruppen werden 0,3 bis 1 Grammäquivalente neutralisiert. Dies ergibt einen pH-Wert des wäßrigen Überzugsmittels zwischen 5 und 10. Vorzugsweise liegt der pH-Wert des wäßrigen Überzugsmittels bei 7 bis 9.

Als Neutralisationsmittel können Ammoniak, Mono- und Polyamine eingesetzt werden. Namentlich seien beispielsweise genannt:

Ammoniak, Ethylamin, Diethylamin, Triethylamin, Trimethylamin, Mono-, Di- oder Triethanolamin, Dimethylethanolamin.

Die erfindungsgemäßen Bindemittel aus dem Copolymerisat mit teilweise oder vollständig neutralisierten Carboxylgruppen, Lactam und Aminoplast sind mit Wasser verdünnbar, was ggf. in Gegenwart von organischen Lösungsmitteln erfolgen kann.

Geeignete organische Lösungsmittel sind beispielsweise Alkohole mit 1—4 C-Atomen wie Methanol, Ethanol, n- und iso-Propanol, Butanole; Essigsäureester mit 2—4 C-Atomen in der Alkoholkomponente, wie Essigsäureethyl- und -butylester oder Ethylglykolacetat, Ethylenglykol-Monoalkylether mit 1—4 C-Atomen im Alkylrest wie Ethylenglykolmonomethyl-, -ethyl- und -butylether;

aliphatische und alicyclische Ketone wie Methylethylketon, Methylisobutylketon, Cyclohexanon, Aceton; niedere Ether, wie Tetrahydrofuran oder Gemische der genannten Lösungsmittel.

Die aus den erfindungsgemäßen Bindemitteln nach Verdünnung mit Wasser, ggf. in Gegenwart organischer Lösungsmittel erhaltenen wäßrigen Einbrennlacke können Weißpigmente, insbesondere Titandioxid, in Mengen von 10–100 Gew.-%, bezogen auf Bindemittel, enthalten. Darüber hinaus können noch anorganische oder organische Buntpigmente in Mengen von bis zu 5 Gew.-% sowie Füllstoffe in Mengen von ebenfalls bis zu 5 Gew.-%, Verlaufsmittel bis zu 10 Gew.-%, Wachse zur Erhöhung der Kratzfestigkeit bis zu 10 Gew.-% und übliche Härtungskatalysatoren bis zu 1 Gew.-%, jeweils bezogen auf Bindemittel, im wäßrigen Einbrennlack enthalten sein.

Die in dieser Weise hergestellten Überzugsmittel können unter Verwendung der üblichen Verfahren aufgetragen werden, z. B. durch Umkehrwalzenbeschichter, Sprühen, Streichen und Tauchen oder ähnliche übliche Arbeitsweisen.

Als zu überziehende bzw. zu beschichtende Substrate kommen Metalle, Glas, Kunststoffe, keramische Materialien, insbesondere Metalle, in Frage.

Die Härtung erfolgt im allgemeinen bei Temperaturen von 80° C–250° C, wobei die Bedingungen so zu wählen sind, daß das Lactam nicht vorzeitig verdampft. Es ist manchmal vorteilhaft, die Härtung zunächst bei Temperaturen unter 120° C zu beginnen und bei Temperaturen über 120° C zu vervollständigen.

Die mit den erfindungsgemäßen Bindemitteln hergestellten Überzugsmittel ergeben nach ihrer Härtung Überzüge mit guten anwendungstechnischen Daten und von guter Chemikalien- und Witterungsbeständigkeit. Insbesondere können Haushaltgeräte mit metallischen Oberflächen wie Spülmaschinen, Waschmaschinen und Kühlschränke mit den aus den erfindungsgemäßen Bindemitteln erhaltenen wäßrigen Einbrennlacken lackiert werden, da die Überzüge eine besonders hohe Waschlaugenbeständigkeit und Lösungsmittelbeständigkeit, einen hohen Glanz und ausgezeichnete Oberflächenhärte aufweisen.

Die in den Beispielen angegebenen Teile und Prozentzahlen beziehen sich auf das Gewicht, sofern nicht anders vermerkt.

## Beispiel 1

In einem mit Rückflußkühler, Heiz-, Kühl- und Dosiervorrichtung versehenen Glasgefäß wurden 600 g ε-Caprolactam vorgelegt und auf 110° C erhitzt. Im Verlauf von 3 Stunden wurde bei 110° C eine Mischung aus 179,7 g 2-Hydroxypropylmethacrylat, 441 g n-Butylacrylat, 1113 g Styrol, 64,5 g Acrylsäure, 352,8 g N-Methoxymethylacrylsäureamid mit 12,0 g Mercaptoethanol zudosiert. Gleichzeitig wurde innerhalb eines Zeitraumes von 4 Stunden eine Mischung aus 66 g tert.-Butylperoctoat und 171 g n-Butylglykol zugetropft. Anschließend wird 3 Stunden bei 110° C nachgerührt, auf Rückflußtemperatur (150° C) erhitzt und das Reaktionsgut eine Stunde bei dieser Temperatur gehalten. Nach dem Abdrücken über ein Filter wird in praktisch quantitativer Ausbeute ein viskoses Harz erhalten, das einen Festgehalt von ca. 91 Gew.-% besitzt.

Der Festgehalt wurde — wie auch in den nachfolgenden Beispielen — bestimmt, indem 1 g Harzlösung auf einem Metalldeckelchen von 7,5 cm Durchmesser in einer Schichtdicke von ca. 50 µm 1 Stunde im Umlufttrockenschrank auf 80° C erhitzt wurde.

Das Copolymerisat selbst besteht aus copolymerisierten Einheiten von 8,3% 2-Hydroxypropylmethacrylat, 20,4% n-Butylacrylat, 51,8% Styrol, 3% Acrylsäure und 16,4% N-Methoxymethylacrylsäureamid. Es besitzt ein mittleres Molekulargewicht $\overline{M}_n$ von 2558 und eine molekulare Uneinheitlichkeit U von 116.

Die Säurezahl des Copolymerisats beträgt 22 mg KOH/g Substanz.

73,4 Teile des vorstehenden Harzes (Festgehalt 91 Gew.-%; Copolymerisat + Caprolactam + n-Butylglykol) werden mit 2,04 Teilen Dimethylethanolamin neutralisiert. 26,35 Teile des neutralisierten Harzes werden mit 4,01 Teilen eines handelsüblichen mit Methanol veretherten Melaminformaldehydharzes (Resimene 745[R], Handelsprodukt der Firma Monsanto) abgemischt. Zur Herstellung eines Weißlacks wird vorstehendes Bindemittel mit 19,24 Teilen Titandioxid (Rutiltyp), 0,47 Teilen p-Toluolsulfonsäure (10% in Isopropanol), 0,21 Teile eines handelsüblichen Verlaufsmittels, 45 Teilen Butylglykol und 20,56 Teilen Wasser angerieben und mit einem Butylglykol/Wassergemisch im Gewichtsverhältnis 1 : 1 auf Spritzviskosität nach DIN 53 211 auf 50 sec eingestellt. Der erhaltene Weißlack wurde auf zinkphosphatierte Stahlbleche durch Spritzen appliziert (Trockenfilmdicke ca. 25–30 µm) und 10 Minuten bei 180° C im Umlufttrockenschrank eingebrannt.

Die Kennzahlen (Säurezahl des Copolymerisats, Festgehalt der Copolymerisatlösung, Viskosität des Bindemittels) sowie Prüfergebnisse des gehärteten Films (Glanz nach Gardner, Waschlaugenbeständigkeit) sind aus der Tabelle ersichtlich.

Test der Waschlaugenbeständigkeit

Die lackierten Prüfbleche (Dicke der Filme 30 µm, eingebrannt 10 Minuten bei 180°C) wurden über einen Zeitraum von 4 Stunden bei 95°C in eine 0,2%ige wäßrige Lösung eines handelsüblichen Waschmittels auf Basis von Pentanatriumtripolyphosphat, Natriummetasilikat, Soda, oxethyliertem Nonylphenol (10 Äthylenoxideinheiten pro Mol Phenol) und Cyanursäurechlorid gegeben.

Nach dem Abspülen mit kaltem Wasser werden diese Bleche nochmals über 4 Stunden einer 0,3%igen Lösung des oben angegebenen Waschmittels bei 95°C ausgesetzt. Waschlaugenbeständigkeit wird attestiert, wenn dieser Testzyklus (insgesamt 480 Minuten) zweimal ohne Blasenbildung oder Mattwerden der Lackfilme durchlaufen wird.

Vergleichsversuch

Beispiel 1 wurde wiederholt mit der Änderung, daß anstelle der vorgelegten 600 g ε-Caprolactam 600 g n-Butylglykol eingesetzt wurden. Der Festgehalt des viskosen Harzes betrug 71% die SZ des Copolymerisats 23. Die Zusammensetzung des Copolymerisats entspricht der Copolymerisatzusammensetzung des Beispiels 1. $\bar{M}_n = 2284$, U = 86.

Kenndaten und Prüfergebnisse sind aus der Tabelle ersichtlich.

Eine vergleichende Betrachtung zeigt einmal, daß der Festgehalt der Harzlösung, hergestellt durch Copolymerisation der Monomeren in ε-Caprolactam, wesentlich höher ist und die Viskosität des Bindemittels des Beispiels 1 wesentlich niedriger ist als entsprechende Werte des Vergleichsproduktes. Weiter ist ersichtlich, daß Lackfilme mit erfindungsgemäßen Bindemitteln den Waschlaugentest bestehen, jedoch nicht Filme vom Vergleichsprodukt, da schon nach 420 Minuten Blasenbildung und ein Mattwerden des Lackfilms beobachtet wird. Schließlich liegt auch schon der Ausgangswert (vor dem Waschlaugentest) des Glanzes nach Gardner beim Vergleichsprodukt deutlich niedriger als beim Lackfilm eines mit einem erfindungsgemäßen Bindemittel hergestellten Überzuges.

Beispiel 2

Das Monomerengemisch setzt sich aus 179,7 g 2-Hydroxypropylmethacrylat, 441 g 2-Ethyl-hexylacrylat, 1113 g Styrol, 64,5 g Acrylsäure, 352,8 g N-Methoxymethylacrylsäureamid und 12 g Mercaptoethanol zusammen. Die Initiatormischung bestand aus 66 g tert.-Butylperoctoat und 171 g Butylglykol. Im Reaktionskessel wurden 600 g ε-Caprolactam vorgelegt. Das Copolymerisat wurde analog Beispiel 1 hergestellt, ebenso das Bindemittel und der Weißlack. Kenndaten und Prüfergebnisse des eingebrannten Lackfilms sind aus der Tabelle ersichtlich.

Beispiel 3

Es wurde wie in Beispiel 1 verfahren, jedoch mit folgenden Änderungen:

Die Monomerenmischung bestand aus 495 g 2-Hydroxypropylmethacrylat, 1232 g Butylacrylat, 3107 g Styrol, 178 g Acrylsäure, 972 g N-Methoxymethylacrylsäureamid und 70 g Mercaptoethanol. Die Initiatorlösung bestand aus 254 g tert.-Butylperoctoat und 485 g Butylglykol. Im Reaktionsgemisch wurden 1697 g ε-Caprolactam und 1510 g Butylglykol vorgelegt. Das erhaltene Copolymerisat bzw. Lackbindemittel besaßen die in der Tabelle aufgeführten Kennzahlen und der ausgehärtete Film die angegebenen anwendungstechnischen Prüfergebnisse.

Beispiel 4

Beispiel 1 wurde wiederholt, jedoch mit folgenden Änderungen:

Die Monomerenmischung bestand aus 495 g 2-Hydroxypropylmethacrylat, 1232 g Butylacrylat, 3007 g Styrol, 178 g Acrylsäure, 972 g N-Methoxymethylacrylsäureamid und 70 g Mercaptoethanol. Das Initiatorgemisch setzte sich aus 254 g tert.-Butylperoctoat und 475 g Butylglykol zusammen. Im Reaktionskessel wurden 755 g Butylglykol und 2452 g ε-Caprolactam vorgelegt. Die Kennzahlen des Copolymerisats und des Bindemittels sowie die anwendungstechnischen Prüfdaten des ausgehärteten Films sind in der Tabelle zusammengefaßt.

Tabelle

Kennzahlen und Prüfergebnisse

| | Beispiele 1 | 2 | 3 | 4 | Vergleich |
|---|---|---|---|---|---|
| **A. Kennzahlen** | | | | | |
| Säurezahl des Copolymerisats | 22 | 22 | 18 | 18 | 23 |
| Festgehalt (%) | 91 | 91 | 80 | 87 | 71 |
| Viskosität des Bindemittels, 50%ig in Butylglykol nach DIN 53 211 (sec) | 105 | 127 | 101[1] | 66 | 447 |
| **B. Prüfergebnisse** | | | | | |
| Glanz nach Gardner 20°-Winkel (ASTM 523) | 78 | 76 | 91 | 92 | 53 |
| Waschlaugenbeständigkeitstest (Min.) | 2 × 480 bestanden | 2 × 480 bestanden | 2 × 480 bestanden | 2 × 480 bestanden | 420 nicht bestanden |

[1]) Viskosität, 60%ig in Butylglykol nach DIN 53 211 (sec).

**Patentansprüche**

1. Wasserverdünnbare Lackbindemittel aus einer Mischung aus

A. 20 – 94 Gew.-% eines Copolymerisats, bestehend aus copolymerisierten Einheiten von
   a) 30 – 65 Gew.-% eines Vinyl- oder Isopropenylaromaten mit 8 – 14 C-Atomen oder eines Methacrylsäurealkylesters mit 1 – 4 C-Atomen in der Alkoholkomponente oder deren Mischungen,
   b) 10 – 30 Gew.-% mindestens eines Acrylsäurealkylesters mit 1 – 8 C-Atomen in der Alkoholkomponente,
   c) 1 – 20 Gew.-% Maleinsäure, Fumarsäure, Itaconsäure oder deren Halbester mit 1 – 8 C-Atomen in der Alkoholkomponente, (Meth)Acrylsäure oder Mischungen der genannten Monomeren, wobei 30 – 100% der Anzahl der Carboxylgruppen durch Ammoniak, Mono- oder Polyamine neutralisiert sind,
   d) 5 – 20 Gew.-% mindestens eines Hydroxyalkylesters der (Meth)Acrylsäure mit 2 – 4 C-Atomen in der Alkylgruppe oder Glycidyl(meth)acrylat oder Mischungen der vorgenannten Monomeren, und
   e) 10 – 30 Gew.-% N-Methylol(meth)acrylsäureamid oder N-Methoxymethyl(meth)acrylsäureamid oder deren Mischungen;

B. 1 – 40 Gew.-% eines gesättigten Lactams der Formel

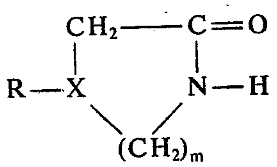

worin
X für eine CH-Gruppe steht, wobei dann
R Wasserstoff und
m eine ganze Zahl von Null bis 9 bedeuten oder
X für ein Stickstoffatom steht, wobei dann

R einen gesättigten aliphatischen Rest, einen araliphatischen Rest mit 7—12 Kohlenstoffatomen oder einen Pyridinrest oder einen durch niedere Alkylreste ($C_1-C_4$) substituierten Pyridinrest, und

m die Zahl 3 bedeuten, und

C. 5—40 Gew.-% eines Aminoplastharzes.

2. Verwendung der Lackbindemittel gemäß Anspruch 1 zur Herstellung wäßriger Überzugsmittel.

## Claims

1. Water-dilutable lacquer binders consisting of a mixture of

A. 20—94% by weight of a copolymer consisting of copolymerised units of
- a) 30—65% by weight of an aromatic vinyl or isopropenyl compound having 8—14 C-atoms or of a methacrylic acid alkyl ester having 1—4 C-atoms in the alcohol component, or mixtures thereof,
- b) 10—30% by weight of at least one acrylic acid alkyl ester having 1—8 C-atoms in the alcohol component,
- c) 1—20% by weight of maleic acid, fumaric acid, itaconic acid or their semi-esters having 1—8 C-atoms in the alcohol component, (meth)acrylic acid or mixtures of the aforesaid monomers, 30—100% of the number of carboxyl groups having been neutralised by ammonia, or monoamines or polyamines,
- d) 5—20% by weight of at least one hydroxyalkyl ester of (meth)acrylic acid having 2—4 C-atoms in the alkyl group or glycidyl (meth)acrylate or mixtures of the aforesaid monomers, and
- e) 10—30% by weight of N-methylol (meth)acrylic acid amide or N-methoxymethyl(meth)acrylic acid amide or mixtures thereof,

B. 1—40% by weight of a saturated lactam of the formula

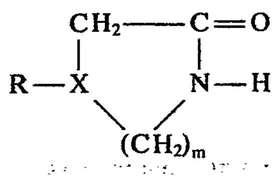

wherein

X denotes a CH-group, in which case

R denotes hydrogen and

m represents an integer from 0 to 9, or

X denotes a nitrogen atom, in which case

R denotes a saturated aliphatic group, an araliphatic group having 7—12 carbon atoms or a pyridine group or a pyridine group substituted by lower alkyl groups ($C_1-C_4$), and

m represents the number 3, and

C. 5—40% by weight of an aminoplast resin.

2. Use of the lacquer binders according to Claim 1 for producing aqueous coating compositions.

## Revendications

1. Agent liant diluable à l'eau pour vernis, cet agent étant constitué d'un mélange comprenant:

A. 20—94% en poids d'un copolymère constitué de motifs copolymérisés de:
- a) 30—65% en poids d'un hydrocarbure aromatique vinylique ou isopropénylique contenant 8 à 14 atomes de carbone ou d'un ester alkylique d'acide méthacrylique contenant 1 à 4 atomes de carbone dans le composant alcool, ou de leurs mélanges,
- b) 10—30% en poids d'au moins un ester alkylique d'acide acrylique contenant 1 à 8 atomes de carbone dans le composant alcool,
- c) 1—20% en poids d'acide maléique, d'acide fumarique, l'acide itaconique ou de leurs hémi-esters contenant 1 à 8 atomes de carbone dans le composant alcool, d'acide acrylique, d'acide méthacrylique ou de mélanges des monomères précités, 30 à 100% du nombre de groupes carboxy étant neutralisés par l'ammoniac, des mono-amines ou des polyamines,

d) 5–20% en poids d'au moins un ester hydroxyalkylique de l'acide acrylique ou de l'acide méthacrylique contenant 2 à 4 atomes de carbone dans le groupe alkyle, ou d'acrylate ou de méthacrylate de glycidyle ou de mélanges des monomères précités, et

e) 10–30% en poids de N-méthylol-acrylamide, de N-méthylol-méthacrylamide, de N-méthoxyméthyl-acrylamide, de N-méthoxyméthyl-méthacrylamide ou de leurs mélanges;

B. 1–40% en poids d'un lactame saturé de formule:

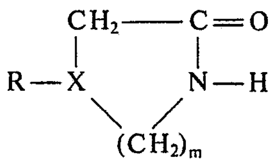

dans laquelle
X représente un groupe CH et, dans ce cas:
R représente un atome d'hydrogène et
m est un nombre entier de 0 à 9, ou
X représente un atome d'azote et, dans ce cas:
R représente un groupe aliphatique saturé, un groupe araliphatique contenant 7 à 12 atomes de carbone ou un groupe pyridine, ou encore un groupe pyridine substitué par des groupes alkyle inférieurs (contenant 1 à 4 atomes de carbone), et
m est égal à 3, et

C. 5–40% en poids d'une résine aminoplaste.

2. Utilisation de l'agent liant pour vernis suivant la revendication 1 en vue de préparer des agents d'enduction aqueux.